Europäisches Patentamt

European Patent Office

Office européen des brevets

(19)

(11) Veröffentlichungsnummer: **0 315 903**
**A1**

(12) # EUROPÄISCHE PATENTANMELDUNG

(21) Anmeldenummer: **88118363.6**

(51) Int. Cl.4: **C08G 75/04**

(22) Anmeldetag: **04.11.88**

(30) Priorität: **11.11.87 DE 3738277**

(43) Veröffentlichungstag der Anmeldung:
**17.05.89 Patentblatt 89/20**

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Dorf, Ernst-Ulrich, Dr.**
**Bodelschwinghstrasse 16**
**D-4150 Krefeld 1(DE)**
Erfinder: **Dicke, Hans-Rudolph, Dr.**
**Kaiserswerther Strasse 48**
**D-4150 Krefeld 1(DE)**
Erfinder: **Rüsseler, Wolfgang, Dr.**
**Waldhofstrasse 121**
**D-4150 Krefeld 1(DE)**
Erfinder: **Eckhardt, Volker, Dr.**
**Bodelschwinghstrasse 14**
**D-4150 Krefeld 1(DE)**
Erfinder: **Genz, Joachim, Dr.**
**Bodelschwinghstrasse 16**
**D-4150 Krefeld 1(DE)**

(54) **Verfahren zur Herstellung von Polyarylensulfiden.**

(57) Die Erfindung betrifft ein Verfahren zur Herstellung von Polyarylensulfiden durch Schmelzkondensation, bei dem die Bildung der Sulfidobrücken des Polymeren durch Abspaltung einer unter den Reaktionsbedingungen flüchtigen Verbindung erfolgt.

EP 0 315 903 A1

## Verfahren zur Herstellung von Polyarylensulfiden

Die Erfindung betrifft ein Verfahren zur Herstellung von Polyarylensulfiden durch Schmelzkondensation, bei dem die Bildung der Sulfidobrücken des Polymeren durch Abspaltung einer unter den Reaktionsbedingungen flüchtigen Verbindung erfolgt.

Polyarylensulfide (PAS) und Verfahren zu ihrer Herstellung sind bekannt (aus Halogenthiophenolaten: z.B. US-PS 32 74 165, J. Polymer Sci. 58 - (1962) 351-367; aus Natriumsulfid und Dihalogenaromaten: z.B. US-PS 33 54 129).

Diese Verfahren haben den Nachteil, daß bei ihrer Durchführung Lösungsmittel verwendet werden müssen. Zum Preis für die Lösungmittel kommen aufwendige Apparaturen zur Reaktionsdurchführung, Wiedergewinnungskreisläufe zur Rückgewinnung der Lösungsmittel, aufwendige Aufarbeitung des Nebenproduktes Natriumchlorid und ein vollkommen getrennter Verfahrensschritt zur Granulierung des Produktes hinzu.

Das erfindungsgemäße Verfahren vermeidet diese Nachteile, da Bis(silyl)thioether und Dihalogenaromaten in Masse ohne Lösungsmittel kondensiert werden können. Ein weiterer Vorteil ist, daß bei der Kondensation unter den Reaktionsbedingungen flüchtige Abspaltprodukte entstehen, die aus dem Reaktionsgefäß entweichen können. Das PAS fällt in geschmolzener Form in hoher Reinheit an.

Das erfindungsgemäße Verfahren ist dadurch gekennzeichnet, daß Mischungen aus Bis(silyl)-thioethern der Formeln I und/oder II und Dihalogenaromaten der Formel III,

$R_3Si\text{-}S\text{-}SiR_3$    (I)

$R_3Si\text{-}S\text{-}Ar\text{-}S\text{-}SiR_3$    (II)

HaL-Ar-Hal    (III)

in welcher

Hal für Halogen wie F und Cl steht,

Ar für zweibindige einkernige oder anellierte $C_6$-$C_{24}$-aromatische Reste oder heterocyclische Reste mit bis zu 3 Heteroatomen wie N, O, S oder zwei einbindige aromatische bzw. heterocyclische Einheiten steht, die über eine Einfachbindung und/oder über zweibindige $C_6$-$C_{24}$-Aromaten bzw. -Heterocyclen und/oder über eine oder mehrere Einheiten ausgewählt aus der Gruppe -O-, -NR$^1$-, -CR$^1_2$-, -S-, -S(O)-, -S(O)$_2$-, -C(O)-, -C(O)-O-, -C-(O)-NR$^1$- und -[C(O)-]$_2$N- ($R^1$ = $C_1$-$C_4$- Alkyl, $C_5$-$C_{10}$-Cycloalkyl, $C_6$-$C_{24}$-Aryl, $C_7$-$C_{30}$-Aralkyl oder -Alkaryl) verknüpft sein können, wobei die einzelnen aromatischen Ringe 1 bis 4 Substituenten $R^2$ tragen können, ausgewählt aus den unter $R^1$ aufgeführten Resten und/oder -OR$^1$, -NR$^1$-, -CR$^1_3$-, -SR$^1$-, -S(O)-R$^1$, -S(O)$_2$-R$^1$, - C(O)-R$^1$, -C-(O)-O-R$^1$, -C(O)-NR$^1_2$-, steht und

R für $C_1$-$C_4$-Alkyl oder $C_5$-$C_{20}$-Cycloalkyl steht, mit Mischungsverhältnissen (I und/oder II):III von 0,9:1 bis 1,1:1 gegebenenfalls in Gegenwart von 0,01 bis 1 Gew.-% (bezogen auf die Menge der Ausgangsmaterialien der Formeln I und/oder II und III) mindestens eines Alkali- und/oder Erdalkali- bzw. Ammoniumhalogenids als Katalysator und gegebenenfalls in Gegenwart von 0,01 bis 1 Gew.-% (bezogen auf die Menge der Ausgangsmaterialien der Formel I und/oder II und III) eines Cokatalysators, ausgewählt aus den üblichen Phasentransferkatalysatoren, bei Temperaturen von 150 bis 400°C unter Abspaltung von Halogentrialkylsilan bzw. Halogen(tris)cycloalkylsilan umgesetzt werden.

Bevorzugte Katalysatoren sind die Fluoride der Alkali-(z.B. Na, K, Cs) und Erdalkalimetalle (z.B. Mg, Ca) und Ammoniumfluorid.

Das erfindungsgemäße Verfahren kann z.B. in einer Apparatur durchgeführt werden, bei der alle Teile, die mit der (heißen) Reaktionsmischung in Berührung kommen (Wanderung, Rühreinrichtung etc.), aus Materialien bestehen, die keine Schwermetallionen abgeben (wie z.B. Glas, Titan, Zirkon, o.ä.). In diesem Fall kann auf einem Katalysator und Cokatalysator verzichtet werden.

Wird das erfindungsgemäße Verfahren in anderen als den o.g. Apperaturen durchgeführt, beispielsweise in (Edel)-Stahlapperaturen usw. so kann die Verwendung von Katalysatoren und gegebenenfalls Cokatalysatoren vorteilhaft sein.

Die Apparatur kann aus verschiedenen Materialien bestehen, z.B. aus Titan und Glas usw., z.B. kann eine Apparatur verwendet werden, die teilweise aus Titan und teilweise aus Glas besteht.

Der Druck kann zwischen 0,3 und etwa 4 bar liegen. Die Reaktion kann diskontinuierlich (batch-Fahrweise) und kontinuierlich durchgeführt werden. Die Reaktionszeit kann dabei in weiten Bereichen variieren. Das Reaktionsgefäß wird zweckmäßig mit einer Vorrichtung zur Kondensation des Halogentrialkylsilans bzw. Halogen(tris)cycloalkylsilans ausgerüstet, das zur erneuten Synthese des Ausgangsmaterials verwendet werden kann. Vorrichtungen zur Weiterverarbeitung des Polymeren wie Extruder, Kneter etc. können direkt an das Reaktionsgefäß angeschlossen oder in das Reaktionsgefäß integriert sein.

Gegebenenfalls kann eine Zugabe von (Halogenarylthio)silanen der Formel (IV)

Hal-Ar-S-SiR$_3$    (IV),

in welcher

Ar, R und Hal die bei den Formeln (I), (II) und (III) angegebene Bedeutung haben,
zur Reaktionsmischung erfolgen.

Es ist möglich, den Kondensationsgrad durch Variation der Ausgangsmaterialien zu beeinflussen.

Beispielsweise kann die Polymerisationsreaktion durch Zugabe von bestimmten Mengen monofunktioneller Verbindungen der Formel (V) und/oder Formel (VI)

$$R^3\text{-}Ar\text{-}S\text{-}SiR_3 \quad (V),$$

$$Hal\text{-}Ar\text{-}R^3 \quad (VI)$$

in welchen
$R^3$ für $R^2$ und H steht und
R, $R^2$, Hal und Ar die bei den Formeln (I), (II) und (III) angegebene Bedeutung haben,
gesteuert werden.

Durch den Einsatz trifunktioneller Ausgangsstoffe ist eine zusätzliche Erhöhung des Molekulargewichts bis hin zur Venetzung möglich.

Das Verfahren eignet sich außerdem zur Synthese von Blockcopolymeren, wobei die jeweiligen Blöcke vor dem Zusammenfügen durch Homopolymerisation verschiedener Ausgangsmaterialien mit unterschiedlichen Strukturen gebildet werden.

Das erfindungsgemäße Verfahren kann in Gegenwart von Zusätzen und Verdünnungsmitteln, die unter den Reaktionsbedingungen inert bleiben, beispielsweise aprotische organische Lösungsmittel (z.B. N-Alkyllactame, N,N'-Dialkyl-N,N'-alkylenharnstoffe, Diphenylether, Biphenyl etc.), Polymere oder anorganische Inertstoffe durchgeführt werden.

Beispiele für erfindungsgemäß einsetzbare Bis(silyl)thioether der Formeln (I) oder (II) sind Bis(trimethylsilyl)sulfid, 1,4-Bis(trimethylsilylthio)benzol, 1,3-Bis(trimethylsilylthio)benzol, 4,4'-Bis(trimethylsilylthio)diphenylsulfid, 4,4'-Bis(trimethylsilylthio)diphenylether, 4,4'-Bis(trimethylsilylthio)biphenyl, 4-4'-Bis(trimethylsilylthio)diphenylsulfon, 4,4'-Bis(trimethylsilylthio)benzophenon etc. Bevorzugt werden 1,4-Bis(trimethylsilylthio)benzol, 1,3-Bis(trimethylsilylthio)benzol, 4,4'-Bis(trimethylsilylthio)diphenylsulfid, 4,4'-Bis(trimethylsilylthio)diphenylether und 4,4'-Bis(trimethylsilylthio)biphenyl.

Beispiele für erfindungsgemäß einsetzbare Dihalogenaromaten der Formel (III) sind 1,4-Dichlorbenzol, 1,3-Dichlorbenzol, 4,4'-Dichlordiphenylsulfid, 4,4'-Dichlordiphenylether, 4,4'-Dichlorbiphenyl, 4,4'-Dichlorbenzophenon, 4,4'-Dichlordiphenylsulfon, 1,4-Difluorbenzol, 1,3-Difluorbenzol, 4,4'-Difluordiphenylsulfid, 4,4'-Difluordiphenylether, 4,4'-Difluorbiphenyl, 4,4'-Difluorbenzophenon, 4,4'-Difluordiphenylsulfon etc.

Bevorzugt werden 4,4'-Dichlordiphenylsulfid, 4,4'-Dichlordiphenylether, 4,4'-Dichlorbenzophenon, 4,4'-Dichlordiphenylsulfon und 4,4'-Dichlorbiphenyl.

Beispiele für erfindungsgemäß einsetzbare Halogenarylthiosilane der Formel (IV) sind 4-Chlorphenyltrimethylsilylthioether, 3-Chlorphenyltrimethylsilylthioether, 4-Fluorphenyltrimethylsilylthioether, 3-Fluorphenyltrimethylsilylthioether, 4-Chlor-4'-(trimethylsilylthio)biphenyl, 4-Fluor-4'-(trimethylsilylthio)biphenyl, 4-Chlor-4'-(trimethylsilylthio)benzophenon, 4-Fluor-4'-(trimethylsilylthio)benzophenon etc.

Bevorzugt werden 4-Chlorphenyltrimethylsilylthioether, 3-Chlorphenyltrimethylsilylthioether und 4-Chlor-4'-(trimethylsilylthio)biphenyl.

Beispiele für erfindungsgemäß einsetzbare monofunktionelle Verbindungen der Formel (V) sind (Phenylthio)trimethylsilan, 4-(Trimethylsilylthio)diphenylsulfid etc.

Beispiele für erfindungsgemäß einsetzbare monofunktionelle Verbindungen der Formel (VI) sind 4-Chlordiphenyl, 1-Chlornaphthalin, 2-Chlornaphthalin, 4-Chlordiphenylsulfid, 4-Chlordiphenylether, 4-Fluordiphenyl, 1-Fluornaphthalin, 2-Fluornaphthalin, 4-Fluordiphenylsulfid, 4-Fluordiphenylether etc.

Bevorzugt werden 4-Chlordiphenyl, 4-Chlordiphenylsulfid und 4-Chlordiphenylether.

Beispiele für erfindungsgemäß einsetzbare Katalysatoren sind Ammonimchlorid, Ammoniumfluorid, Lithiumchlorid, Lithiumfluorid, Natriumchlorid, Natriumfluorid, Kaliumchlorid, Kaliumfluorid, Rubidiumchlorid, Rubidiumfluorid, Caesiumchlorid, Caesiumfluorid, Calciumchlorid, Calciumfluorid etc.

Bevorzugt werden Kaliumfluorid, Caesiumchlorid und Caesiumfluorid.

Beispiele für erfindungsgemäß einsetzbare Phasentranferkatalysatoren als Cokatalysatoren sind 18-Krone-6, Dibenzo-18-Krone-6 etc.

Im allgemeinen wird das Schmelzfließverhalten von Polyarylensulfiden nach ASTM 1238-70 bei 316°C unter Verwendung eines 5 kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta_m$ der Polymerschmelze (in Pa.s) bei 306°C in Abhängigkeit von der Schubspannung (in Pa) mit Hilfe eines Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron.

Angegeben wird die Schmelzviskosität, die bei einer Schubspannung von $\tau = 10^2$ Pa gemessen wird.

Die erfindungsgemäßen Polyarylensulfide besitzen direkt nach ihrer Herstellung im allgemeinen Schmelzviskositäten von $0,1 \cdot 10^1$ bis $5 \cdot 10^4$ Pa.s, vorzugsweise $0,1 \cdot 10^1$ bis $1,5 \cdot 10^3$ Pa.s.

Die erfindungsgemäß hergestellten Polyarylensulfide können direkt nach der Herstellung mit anderen Polymeren, Pigmenten und Füllstoffen, beispielsweise Graphit, Metallpulver, Glaspulver, Quarzmehl, Quarzgut, Glasfasern und Kohlefasern gemischt oder mit den für Polyarylensulfiden üblichen Stabilisatoren oder Entformungsmitteln versetzt werden. Sie können direkt durch Extrusion, Extrusionsblasen, Spritzgießen oder sonst übliche Verarbeitungstechniken zu Folien, Fasern oder Formkörpern verarbeitet werden.

Diese können in üblicher Weise Verwendung finden, z.B. als Automobilteile, Armaturen, Elektroteile, z.B. Schalter, elektronische Tafeln, elektronische Bauteile, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen sowie Haushaltsgeräten etc.

## Beispiel 1

5 g 4,4'-Bis(trimethylsilylthio)diphenylether und 3,4 g 4,4'-Dichlordiphenylsulfid werden mit 100 mg Caesiumfluorid in einer Rührapparatur bei 165° C vorgelegt und schrittweise aufgeheizt. Nach 14 h stetiger Temperatursteigerung bis auf 340° C, wobei ein leicht flüchtiges Kondensat übergeht, läßt man den Ansatz erkalten. Im Kondensat kann Trimethylchlorsilan nachgewiesen werden. Der Schmelzkuchen wird zerkleinert und in Isopropanol aufgenommen und gewaschen. Nach Trocknung im Vakuum verbleiben 3,9 g (= 71 %) eines grauen Pulvers mit einer Schmelzviskosität von 5 Pa.s und einem Schmelzpunkt von 271° C.

## Beispiel 2

5 g 4,4'-Bis(trimethylsilylthio)diphenylether, 3,4 g 4,4'-Dichlordiphenylsulfid und 3 g (4-Chlorphenylthio)trimethylsilan werden mit 100 mg Caesiumfluorid in einer Rührapparatur bei 165° C vorgelegt und schrittweise aufgeheizt. Bei einer Temperatur von 270° C beginnt der Ansatz su sieden. Nach 14 h stetiger Temperatursteigerung bis auf 340° C, wobei ein leicht flüchtiges Kondensat übergeht und der Rückfluß allmählich aufhört, läßt man den Ansatz erkalten. Im Kondensat kann Tri methylchlorsilan nachgewiesen werden. Der Schmelzkuchen wird zerkleinert und in Isopropanol aufgenommen und gewaschen. Nach Trocknung im Vakuum verbleiben 4,8 g (= 69 %) eines grauen Pulvers mit einer Schmelzviskosität von 7 Pa.s und einem Schmelzpunkt von 258° C.

## Beispiel 3

5 g 4,4'-Bis(trimethylylsilylthio)diphenylether und 3,4 g 4,4'-Dichlordiphenylsulfid werden in einer Glasrührapparatur mit Titanrührer bei 165° C vorgelegt und schrittweise aufgeheizt. Nach 30 h stetiger Temperatursteigerung bis auf 340° C, wobei ein leicht flüchtiges Kondensat übergeht, läßt man den Ansatz erkalten. Im Kondensat kann Trimethylchlorsilan nachgewiesen werden. Der Schmelzkuchen wird zerkleinert und in Isopropanol aufgenommen und gewaschen. Nach Trocknung im Vakuum verbleiben 4,1 g (= 75 %) eines grauen Pulvers mit einer Schmelzviskosität von 14 Pa.s und einem Schmelzpunkt von 271° C.

## Ansprüche

1. Verfahren zur Herstellung von Polyarylensulfiden, dadurch gekennzeichnet, daß Mischungen aus Bis(silyl)thioethern der Formeln (I) und/oder (II) und Dihalogenaromaten der Formel (III),

$R_3Si-S-SiR_3$   (I)

$R_3Si-S-Ar-S-SiR_3$   (II)

Hal-Ar-Hal   (III)

in welchen

Hal für Halogen wie F und Cl steht,

Ar für zweibindige einkernige oder anellierte $C_6$-$C_{24}$-aromatische Reste oder heterocyclische Reste mit bis zu 3 Heteroatomen wie N, O, S oder zwei einbindige aromatische bzw. heterocyclische Einheiten steht, die über eine Einfachbindung und/oder über zweibindige $C_6$-$C_{24}$-Aromaten bzw. -Heterocyclen und/oder über eine oder mehrere Einheiten ausgewählt aus der Gruppe -O-, -NR¹-, -CR¹₂-, -S-, -S(O)-, -S(O)₂-, -C(O)-, -C(O)-O-, -C(O)-NR¹- und -[C(O)-]₂N- (R¹ = $C_1$-$C_4$-Alkyl, $C_5$-$C_{10}$-Cycloalkyl, $C_6$-$C_{24}$-Aryl, $C_7$-$C_{30}$-Aralkyl oder -Alkaryl verknüpft sein können, wobei die einzelnen aromatischen Ringe 1 bis 4 Substituenten R² tragen können, ausgewählt aus den unter R¹ aufgeführten Resten und/oder -OR¹, -NR¹-, -CR¹₃-, -SR¹-, -S(O)-R¹, -S(O)₂-R¹, -C(O)-R¹, -C(O)-O-R¹, -C(O)-NR¹₂-, steht und

R für $C_1$-$C_4$-Alkyl oder $C_5$-$C_{20}$-Cycloalkyl steht,

mit Mischungsverhältnissen (I und/oder II):III von 0,9:1 bis 1,1:1 gegebenenfalls in Gegenwart von 0,01 bis 1 Gew.-% (bezogen auf die Menge der Ausgangsmaterialien der Formeln I und/oder II und III) mindestens eines Alkali- und/oder Erdalkali-bzw. Ammoniumhalogenide als Katalysator und gegebenenfalls in Gegenwart von 0,01 bis 1 Gew.-% (bezogen auf die Menge der Ausgangsmaterialien der Formel I und/oder II und III) eines Cokatalysators, ausgewählt aus den üblichen Phasentransferkatalysatoren, bei Temperaturen von 150 bis 400 °C unter Abspaltung von Halogentrialkylsilan bzw. Halogen(tris)cycloalkylsilan.

2. Verfahren nach Anspruch 1, dadurch gekennzeichnet, daß der Katalysator aus der Gruppe der Fluoride der Alkali- und Erdalkalimetalle bzw. Ammoniumfluorid ausgewählt wird.

3. Verfahren nach Anspruch 1, dadurch gekennzeichnet, daß als Katalysator Caesiumfluorid eingesetzt wird.

4. Verfahren nach Anspruch 2, dadurch gekennzeichnet, daß als Katalysator Caesiumchlorid eingesetzt wird.

5. Verfahren nach Anspruch 1, dadurch gekennzeichnet, daß als Katalysator Kaliumfluorid und als Cokatalysator der Kronenether 18-Krone-6 eingesetzt wird.

6. Verfahren nach Anspruch 1, dadurch gekennzeichnet, daß zusätzlich zu der Mischung aus Bis(silyl)thioethern der allgemeinen Formeln (I) bzw. (II) und Dihalogenaromaten der allgemeinen Formel (III) ein (Halogenarylthio)silan der allgemeinen Formel (IV) verwendet wird,

Hal-Ar-S-SiR₃     (IV),

in welcher
Hal, Ar und R die in Anspruch 1 angegebene Bedeutung haben.

7. Verfahren nach Anspruch 6, dadurch gekennzeichnet, daß (4-Chlorphenylthio)trimethylsilan als (Halogenarylthio)silan der Formel (IV) eingesetzt wird.

8. Verfahren nach Anspruch 1, dadurch gekennzeichnet, daß die Reaktionsapparatur in allen Teilen, die mit der Reaktionsmischung in Berührung kommen, aus Materialien besteht, die keine Schwermetallionen abgeben.

9. Verfahren nach Anspruch 8, dadurch gekennzeichnet, daß kein Katalysator und Cokatalysator verwendet wird.

10. Verfahren nach Anspruch 8, dadurch gekennzeichnet, daß die Reaktionsapparatur aus Titan und gegebenenfalls Glas besteht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 088 831 (GIST-BROCADES) <br> * Ansprüche 1,5,6,10; Beispiele 1,2 * <br> --- | 1 | C 08 G 75/04 |
| A | CHEMICAL ABSTRACTS <br> Band 95, Nr. 9, 31. August 1981, <br> Abstract 79580g; S. KOZUKA: "Kinetic study on the reaction of (arylthio)trimethylsilane with phenacyl bromide giving aryl phenacyl sulfides and bromotrimethylsilane"; & BULL CHEM SOC JPN, 1985, Bnd 54(5), 1420-3 <br> --- | 1 | |
| A | CHEMICAL ABSTRACTS <br> Band 98, Nr. 13, 28. März 1983, <br> Abstract 107389 J; S. KOZUKA : "Kinetic study on the reaction of (arylthio)trimethylsilane with benzoyl chloride giving S-aryl thiobenzoate and chlorotrimethylsilane"; & MEM FAC ENG OSAKA CITY UNIV, 1981, Bnd 22, 115-119 <br> --- | 1 | |
| A. | DE-B-2 009 323 (INVENTA) <br> * Ansprüche * <br> ----- | 1 | **RECHERCHIERTE SACHGEBIETE (Int. Cl.4)** <br><br> C 08 G 75/00 |

Der vorliegende Recherchenbericht wurde für alle Patentansprüche erstellt

| Recherchenort | Abschlußdatum der Recherche | Prüfer |
|---|---|---|
| BERLIN | 03-02-1989 | BOEKER R.B. |